# EUROPEAN PATENT SPECIFICATION

(11) **EP 0 401 153 B1**
(45) Date of publication and mention of the grant of the patent: **12.10.1994**
(21) Application number: 90630112.2
(22) Date of filing: 30.05.1990
(51) Int. Cl.: G01D 5/26, G01L 1/24

(54) **Fiber optic damage detection system**
Fiberoptisches Defektmeldesystem
Système de détection de défauts par fibre optique

(30) Priority: 01.06.1989 US 359993
(43) Date of publication of application: 05.12.1990
(73) Proprietor: UNITED TECHNOLOGIES CORPORATION, Hartford, CT 06101 (US)
(72) Inventor: Fradenburgh, Evan A., Fairfield, Connecticut 06430 (US); Zincone, Robert, Norwalk, Connecticut 06851 (US)
(74) Representative: Waxweiler, Jean

(56) References cited:
- EP-A- 0 049 979
- DE-A- 2 931 534
- DE-A- 2 942 464
- GB-A- 2 193 825
- US-A- 4 307 386
- PATENT ABSTRACTS OF JAPAN vol. 9, no. 144 (P-365) 19 June 1985 & JP-A-60 024438
- PATENT ABSTRACTS OF JAPAN vol. 13, no. 104 (P-842) 13 March 1989 & JP-A-63 285448
- PATENT ABSTRACTS OF JAPAN vol. 12, no. 97 (P-682) 30 March 1988 & JP-A-62 231142

## Description

This invention relates to damage detection systems, and more particularly to damage detection systems incorporating optical fibers embedded in or on composite structures.

The use of composites for producing various structures is well known, particularly for aircraft, automotive or space applications. Composites have the advantage of high strength and low weight, reducing the energy requirements of automobiles and aircraft. For satelittes or other space structures, composites reduce the lift requirements for placing these structures in orbit.

As presently envisioned, any future space station will include a plurality of pressurized structures integrated by interconnecting trusses, all composed of composite materials. Such large space structures as the pressurized modules will require a highly reliable structural monitoring system because of the potential vulnerability to micrometer damage. Identification and prompt location of any puncture is required to maintain safety and operational reliability. However, there is no adequate system presently available for monitoring the structures and detecting sites of impact damage to allow rapid location and repair.

One method for damage detection involves closely spaced embedded optical fibers in an X-Y coordinate pattern. A plurality of single straight fiber optic strands are placed in a composite. Once a fiber is broken, light transmission is interrupted and the location of the damage determined. In large structures, however, if each adjacent strand in the fiber matrix is an individual fiber, independent from all of the rest, a substantial number of fibers are required. This, in turn, requires an automatic electronic readout system that is highly complex. In addition, the fiber bundles going in and out of the structure will be bulky and heavy. For example, one of the proposed space station modules has a structural surface area on the order of 232 m² (2,500 square feet), comparable to a 15.24 x 15.24 m (50 x 50 foot) square area. To detect a hole of 0.31 cm (1/8") diameter anywhere in such a structure, a pattern of fibers with a 1/8" spacing would be required. An X and Y matrix to precisely locate the hole would require two sets of 4,800 fibers, each fiber 15.24 m (50-foot) long and laid at right angles to each other for a total of 9,600 fibers. For automatic readout, an equal number of photo diodes to detect light transmission through the fibers from the source or a method of sequencing light input from the 9,600 fibers would be required. Such a system would be highly complex and prohibitive in terms of cost and weight.

Another application for a damage detection system is in composite aircraft structures subject to high stress where crack detection or impact damage detection is critical to aircraft survival. For such aircraft applications, the damage detection system must be of minimum complexity and weight to prevent a reduction in aircraft performance. Therefore, the straight X-Y fiber grid system would be unsuitable.

GB-A-2 193 895 discloses a construction material with an optical fiber placed between two flat glass layers bonded together to form a sandwich structure. The optic fiber forms a sinusoidal path. On breaking the unit the light-path will be interrupted and this serves to trigger an alarm.

In JP-A-60024438 a continuous glass fiber is sealed in a glass body and form of a sinusoidal light path. Damage of the glass body is detected by means of a measuring instrument

In JP-A-63285448 a plurality of separate optical fibers are burried at proper intervals in one layer of a multiple layer structure. Breakage of the fibers is checked.

In JP-A-62231142 a plurality of optical fibers are laid at equal intervals on the surface of the external wall member of an aircraft. There is light-leak in each optical fiber when there is damage between the ends.

It is an object of the present invention to provide a damage detection system which can be produced integrally with composite structures.

It is another object of the present invention to provide a damage detection system which provides quick location of damaged areas without requiring an excessively complex monitoring system.

It is a further object of the present invention to provide a damage detection system which utilizes fiber optic strands embedded in composite structures for locating foreign object damage.

It is yet another object of the present invention to provide a fiber optic damage detection system which optimizes the number of fibers required for a given surface area.

According to the present invention, a fiber optic damage detection system for incorporation in a composite structure comprising a first fiber optic strand placed on or embedded in the structure in a pattern of multiple loops which define an area wherein loss of light transmission through the first fiber strand indicates damage to that area, the first fiber strand disposed in a multiple path reversal pattern and, means for monitoring light transmission through the fiber strands, characterized in that said pattern has loops in both the forward and rearward directions with a fiber strand spacing as close as 0.31 cm (1/8 inch).

Advantageous embodiments of the invention are claimed in the dependent claims.

Utilizing a particular pattern of optical fibers placed on or embedded in a composite structure provides rapid determination of the impact damage location. In addition, such patterns minimize the number of fibers required, reducing the complexity of the signal generation, monitoring and locating apparatus.

Fig. 1 is a kown area pattern usable with a single optical fiber.

Fig. 2 is an illustration of a known X-Y looping pattern, including a plurality of fibers arranged to provide optimum area coverage.

Fig. 3 is an illustration of transmission loss versus bend radius for an optical fiber.

Fig. 4 shows an embodiment of the fiber optic detection system of the present invention including a three-loop path reversal pattern wherein the fiber loops rearward as well as forwards.

Fig. 5 shows another embodiment illustrating two cycles of a seven-loop optical fiber pattern.

Fig. 6 shows another embodiment of the present invention, including an area pattern usable on cylindrical structures.

Fig. 7 shows another embodiment of the present invention, including an X-Y area pattern usable on cylindrical structures.

Fig 8. shows another pattern according to the present invention usable on cylindrical structures including conical ends.

Fig 9. shows one longitudinal band of fibers which may be prefabricated on a thin layer of composite or adhesive prior to application to a structure.

Fig. 10. shows a typical circumferential band which may be fabricated by winding a helical pattern directly on a structure.

Fig. 11 shows a redundant input and output system for assuring continued operation should one set of input or output leads be damaged.

Fig. 12 shows a typical termination system for the optical fiber damage detection system of the present invention.

Figs. 13A - C show the incorporation of the fiber optic damage detection system in a composite structure.

The damage detection system of the present invention utilizes conventional optical fibers such as those produced by Spectran Corp, Sturbridge, Mass, or Corning Glass, Houghton Park, New York. Generally such fibers are about 140 microns in diameter, including an outer coating protecting a glass shaft with a core through which the light signal passes. It is contemplated that this damage detection system could be used with any composite system, such as a glass, graphite or polyaramid fiber reinforced composite systems using a wide range of resins. Thus, the invention is not limited by the type of composite chosen.

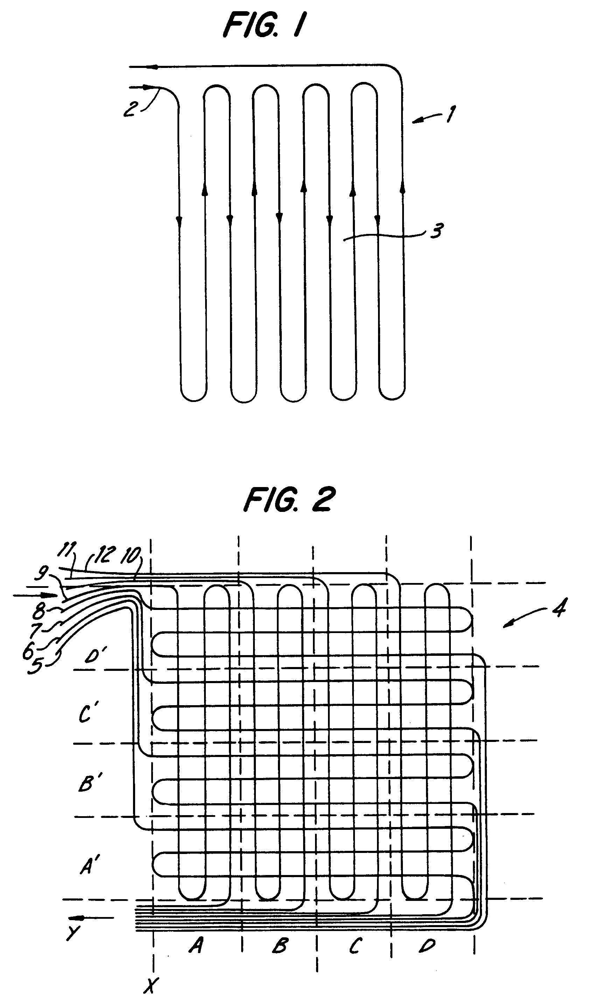

Referring to Fig. 1, a simple looping pattern 1 for a single optical fiber 2 is shown which provides area coverage, with the optical fiber arranged to monitor a substantial area rather than a long narrow strip. The fiber 2 is looped with a tight radius, with a single fiber assigned to a single specific area 3, bounded by the dotted lines. For example, one fiber could be looped in a pattern constrained within one square foot of surface area, pinpointing damage within that 0.09 square meter (one square foot). However, such an arrangement may involve an excessive number of fiber inputs and outputs for large structures.

Referring to Fig. 2, an X-Y grid pattern 4 is shown which may be used in combination with the area coverage concept disclosed in Fig. 1. Eight fibers, 5-12 respectively, are used. Four optical fibers are looped in the X direction (5-8) and four optical fibers are looped in the Y directions (9-12), with each looped fiber providing the equivalent of three individual fibers. While only eight optical fibers are used, 16 zones are defined, shown by the dotted lines, each zone divided into a number of smaller local areas by the crossing fibers. Damage as small as 1/144 of the total area is detected and positively located within one of the 16 zones defined by the X-Y coordinates.

Referring still to Fig. 2, the X axis is defined as A, B, C and D, and the Y axis defined as A', B', C' and D', with each zone denoted as A-A', A-B', B-A', C-B', etc. Each zone includes two distinct fibers passing therethrough. For example, with the 8-fiber pattern of Fig. 2, the fibers numbered from 5-12, it is seen that damage in a zone, such as C-B', will interrupt light transmission through 2 fibers, 6 and 10, pinpointing the damage for repair.

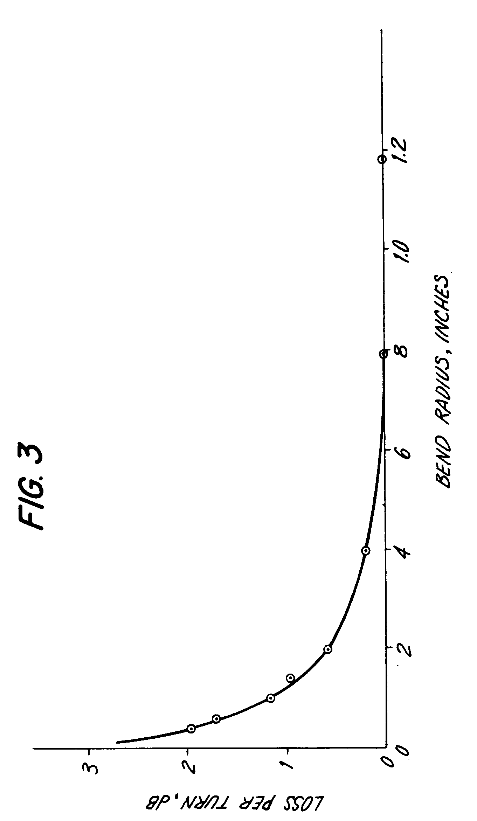

The looping reversal patterns of Figs. 1 and 2 do have limitations due to constraints on the bend radius of optical fibers. If very close spacing is desired, about 0.31 cm (1/8 inch), the fibers are prone to breakage in the bend and they will also be hard to place during composite manufacture because of the tendency to spring back. Referring to Fig. 3, it is also shown that transmission losses increase as radius decreases. For a bend radius of about 0.63 cm (1/4"), for example, the transmission loss per turn is about 1 db for a typical high quality optical fiber. While this may be acceptable for a few turning radii, where many loops are envisioned, such a transmission loss is unacceptable.

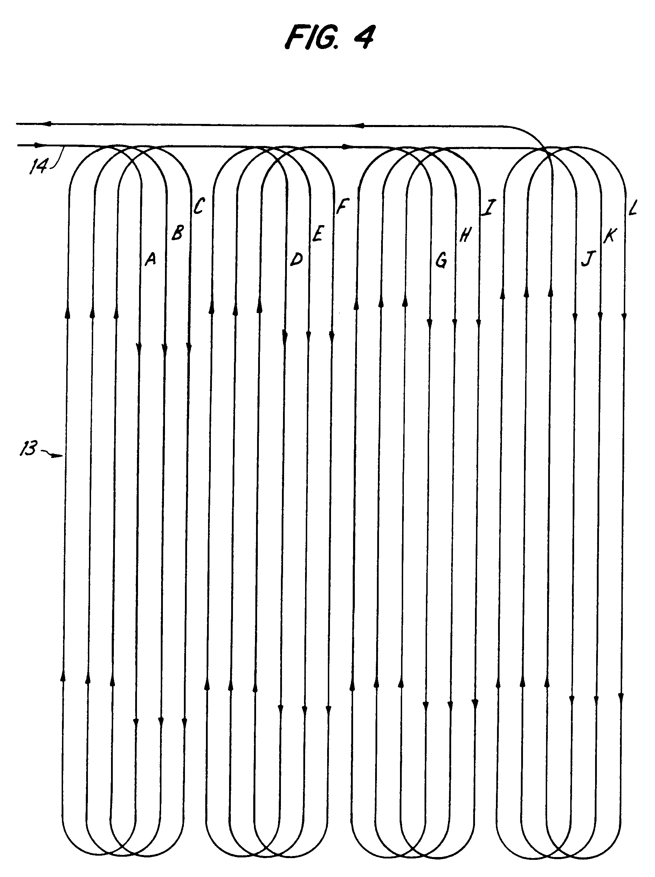

Referring to Fig. 4, a pattern is shown which overcomes this transmission loss. Fig. 4 shows a three-loop path reversal pattern 13 wherein a fiber 14 loops rearward as well as forward. The fiber 14 follows, in downward sequence A-L, going down A, back three units at the bottom of Fig. 4, then four units forward at the top to go down B, back three, forward four to go down C, back three, then forward seven to go down D and start another cycle. The cycle then repeats through loop L. This cycle, of course, could be repeated for a number of cycles. Fig. 4 shows four cycles which provides six parallel fiber runs per cycle, for a total of 24 runs. The important feature of this pattern is that the fiber bend radius for the reverses is increased by a factor of 3 compared to the Fig. 1 and 2 patterns and a bend radius for the upper reverses is increased by a factor of 4. For a run spacing 0.63 cm (1/4"), this provides acceptable bend characteristics for typical optical fibers, reducing transmission losses while easing incorporation in a composite and reducing the potential for breakage.

This pattern would similarly be utilized in an X-Y type grid, as shown in Fig. 2, with a number of fibers patterned as shown in Fig. 4 placed in the X direction, and a number of fibers similarly patterned in the Y direction. Thus, a plurality of distinct zones are defined, with the density of optical fibers within each zone increased. Utilizing the described pattern in an X-Y grid increases the monitoring density while reducing transmission losses and easing incorporation in a composite structure.

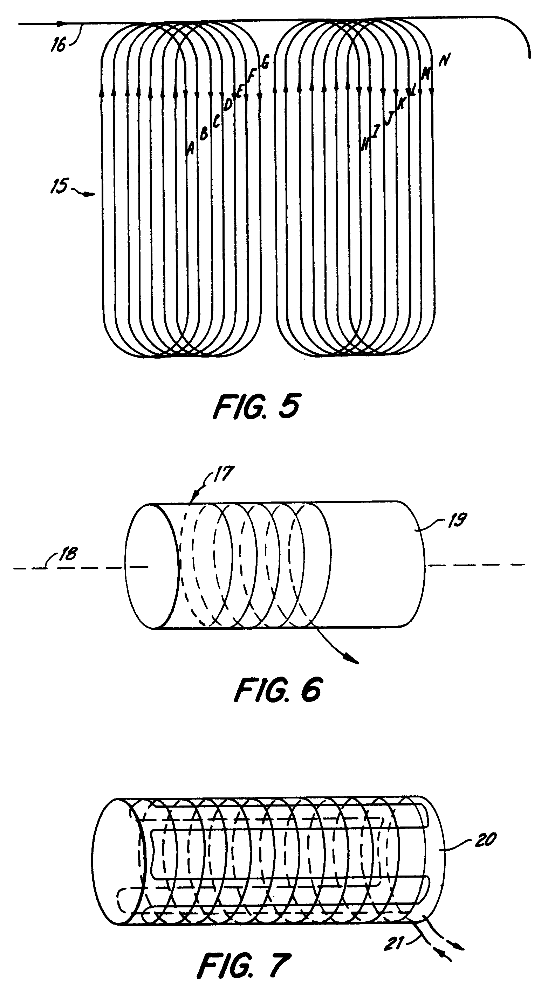

For closer spacing, additional loops can be used For example, referring to Fig. 5, two cycles of a seven-loop path reversal pattern 15 are shown. A fiber 16 enters the area, with the fiber going back seven units and forward eight until the pattern is complete (downward paths A-G) then forward 15 units to start the next cycle (paths H-N). Suitably large bend radii are achieved despite the close spacing of adjacent fibers. This pattern is suitable for covering large surface areas with high fiber density, yet using a minimum number of fibers. For a 15.24 m (50-foot) square, 30.48 cm (1-foot) wide bands, 15.24 m (50-feet) long, may be generated with the single optical fiber looped as described. For a 0.31 cm (1/8") fiber spacing, a total of 96 vertical fiber runs are required per 30.48 cm (foot). Total fiber length is approximately 96 x 15.24 m = 1463 m (96 x 50 = 4,800 feet). In a good quality optical fiber, the transmission loss is quite low at this length. Fifty similar bands in each of the X and Y directions would define 2,500 zones, with damage as small as a 0.31 cm (1/8") diameter hole detected and located in one of the 2,500 zones. The total number of individual fibers required is only 100, which allows the electro/optical monitoring system to be small, lightweight, reliable and inexpensive.

In another embodiment, the present invention is usable on cylindrical structures. Referring to Fig.6, an optical fiber 17 is placed transverse to an axis 18 of a cylinder 19, in a continuous helical pattern which avoids any fiber bends. For example, in a truss structure, such as that proposed for the NASA space station, it is desired to detect damage on any tubular strut of the truss yet it is not required to precisely locate the damage on that strut as the consequences of such damages are not as critical as those involved in a structure such as a pressurized module housing living quarters. Thus, an X-Y type of grid is not needed, and a single fiber wound helically over the entire length of the truss may be used.

If additional structural integrity monitoring capability is desired, longitudinal elements may be included, as for example shown in Fig. 7. A cylinder 20 includes a single fiber 21 first wound helically terearound, and then wound in a loop pattern such as that shown in Fig. 1. In non-critical structures, a tight bend radius is not required, and a reversal pattern need not be used. Thus, fiber density per unit area is increased without increasing monitor complexity.

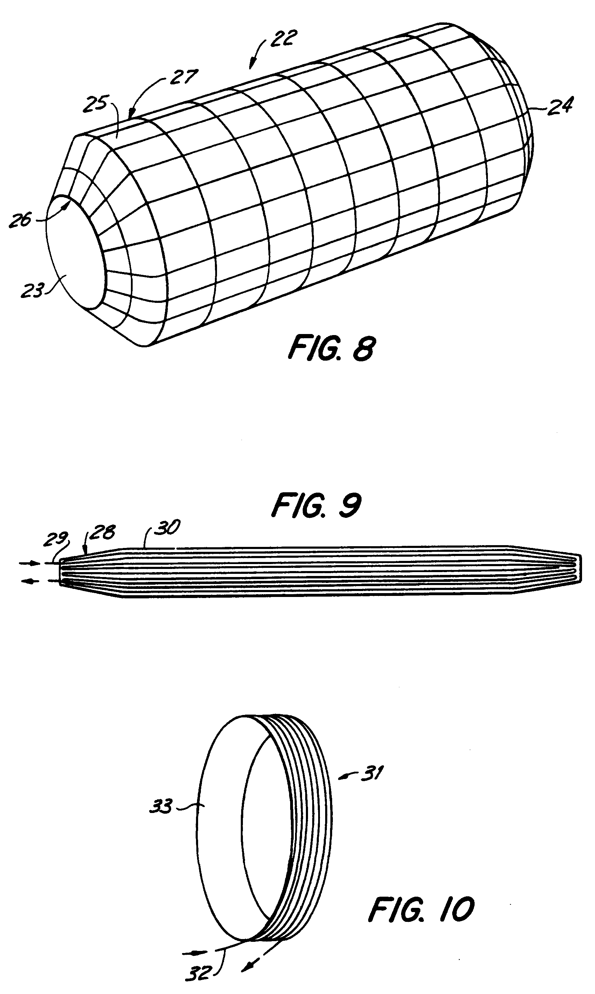

With cylindrical pressurized modules, it is necessary to include a more precise damage location system both on the cylindrical section and on the conical ends. One pattern which provides an X-Y type of damage location capability with a minimum of optical fibers is shown schematically in Fig. 8. A cylinder 22 having conical ends 23 and 24 includes area zones 25 defined by longitudinal bands 26 and circumferential bands 27, with the longitudinal bands extending from the cylindrical region to the conical ends. As previously shown, the X and Y fibers may be patterned in each band according to the patterns shown in Figs. 1, 4 or 5 to increase sensitivity to damage while reducing transmission losses.

Fig. 9 shows a longitudinal band 28 as a preform, which may be prefabricated by placing a fiber 29 in a pattern (shown as a simple loop such as that shown in Fig. 1) on a thin layer of composite or adhesive 30. The band is then applied to either the surface of the structure, or incorporated as one layer in a multi-layer composite structure, where the adhesive holds the fibers in place during molding, preventing fiber movement during consolidation of the composite. Various adhesives could be used such as AF-13 film adhesive produced by the 3M Company. Fig. 10 shows a circumferential band 31, which is fabricated by winding a fiber 32 in a helical pattern directly onto a cylindrical structure 33. The circumferential band may be wound either over or under the longitudinal band.

The fiber optic leads into and out of the fiber optic network will generally be brought to a single conveniently located area to simplify the process of light introduction and collection for analysis. However, this tends to make the system vulnerable to damage in the areas where the fibers are bundled because damage in that area may sever numerous optical links, making it impossible to be sure in what bands or zones other damage occurred. In order to reduce the probability of a system failure, this vulnerable area can be held to a very small fraction of the total monitored area or be armored to reduce its vulnerability. However, this adds complexity and weight to the system. Another approach is to have a completely redundant fiber optic network overlapping the other network but with the input and output leads taking entirely different paths to a light input and collection point. While effective in locating damage, this substantially increases the number of fibers required, again adding weight and complexity to the system.

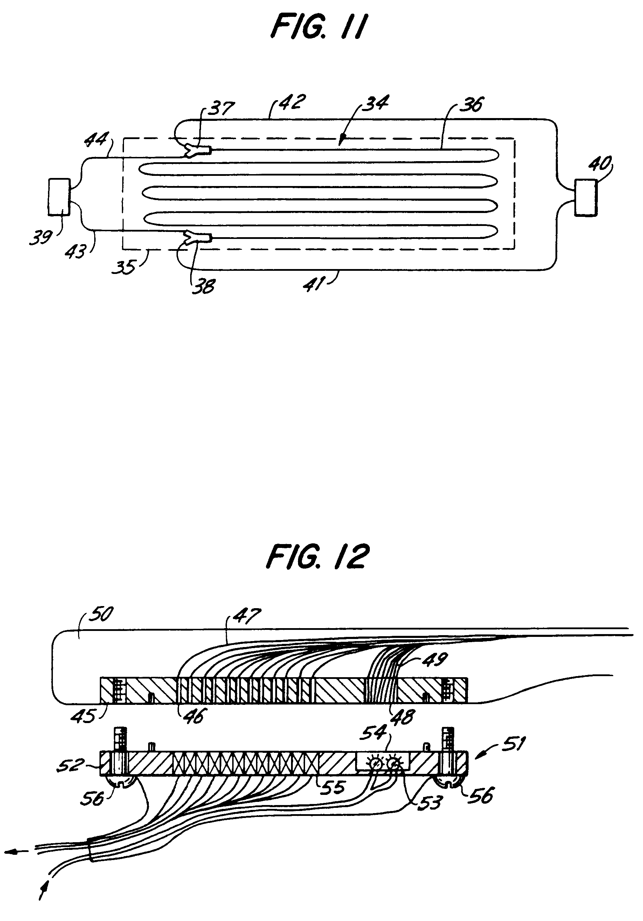

A preferred approach, illustrated in Fig. 11, is to have a single fiber optic network 34 but to use widely separated dual input and output leads. Referring to Fig. 11, the network 34 covers an area 35, bounded by the dotted line. A fiber 36 is placed in a pattern in the area 35, and has two Y-type optical couplers 37 and 38, attached at the beginning and end , respectively, of the fiber run. First and second input/output terminals, 39 and 40, are placed in separate locations, with the leads 41/42 (input) and 43/44 (output) taking separate paths to provide a redundant monitoring system. Thus, damage to one set of input or output leads will not affect operation of the network. The probability of both sets being damaged in a single occurrence is considered quite remote. Of course, any of the previously disclosed patterns can utilize this dual monitoring system.

While various means for terminating the fibers may be used, the preferred termination of the optical fibers is shown in Fig. 12. Referring to Fig. 12, a first block 45, which may be made of metal or another suitable material, is prepared by drilling or otherwise providing a plurality of holes 46 through which individual fibers 47 are inserted. A hole 48 is also provided in the first block 45 for accommodating an opposite end of each fiber in a bundle 49. The first block 45 is inserted into a composite structure 50 during fabrication.

An electro/optic readout system 51 uses a mating block 52, containing pre-aligned light sources 53 in a chamber 54 corresponding to the bundle hole 48, and photo diodes 55 that interface with the optic fibers 47. The rating block is attached to the block 45 by screws 56 to integrate the network. The photo diodes 55 transform the light signals to an electrical impulse for monitoring by a computer or other monitoring means (not shown).

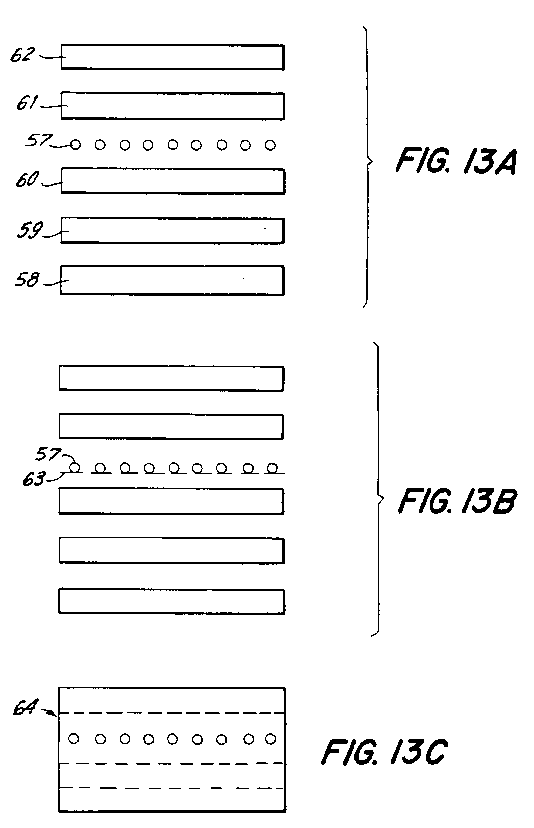

The optical fibers may be installed by lay-up as part of the composite structure which generally includes a plurality of resin preimpregnated layers or plies. Referring to Figs. 13A-C, a fiber optic layer 57 is interposed with a plurality of structural layers, 58 - 62, respectively. Each structural layer may comprise resin preimpregnated fiberglass, polyaramid, graphite or other hybrid laminates. Of course, the number of layers will vary depending on the desired article. In Fig. 13A, the fiber layer 57 is placed on the structural layer 60, and then covered by the structural layer 61. After desired number of structural layers is applied, the assembly is typically vacuum bagged to remove air, placed in an appropriate autoclaving device, heated under pressure and cured. Fig. 13B shows the use of a film adhesive 63 to hold the fiber layer, and Fig. 13C shows a consolidated and cured composite structure 64. Thus, the fiber network may comprise one layer embedded in the structure.

During the optical fiber installation, the fiber ends are routed through the predrilled block, with either the input or output fiber set routed in a prescribed sequence, through the predrilled holes, one fiber in each hole, with the other set bundled in random order through the larger predrilled hole. While the configuration shown in Fig. 12 corresponds to a bundled fiber input set and a prescribed output sequence, the reverse system could also be used. After fabrication and cure, the fiber ends are trimmed and polished flush with the surface of the predrilled block.

This arrangement provides that no fibers are routed outside of the structure and thus the fibers are relatively immune to accidental damage. In addition, the electro/optic readout system is easily replaced if a fault develops, and the fiber optic network system can be manually checked with ease whenever desired by removing the readout system mating block and using a hand-held light on the input fibers and visually inspecting the output array.

Utilizing the particular fiber networks described above allows relatively precise monitoring of structural integrity on sensitive systems such as cylindrical modules usable with a space station, aircraft cabin or wing structures. Such monitoring networks require a minimum of optical fibers while providing a maximum degree of protection. Utilizing the dual inputs and outputs described above additionally provides redundancy to the network without requiring a second redundant network superimposed thereover. In addition, due to the reduced number of fiber leads, the monitoring system can be reduced in complexity and size, saving weight and space while reducing the potential for failure.

While the above invention has been shown and described in relation to particular fiber optic patterns, it will be understood by those skilled in the art that various changes or modifications could be made without varying from the scope of the present invention. For example, the choice of composite material may be determined by the application and should not interfere with the practice of the invention.

## Claims

1. A fiber optic damage detection system for incorporation in a composite structure comprising a first fiber optic strand (2,10,14,16,17) placed on or embedded in the structure in a pattern of multiple loops (3,13,15) which define an area wherein loss of light transmission through the first fiber strand indicates damage to that area, the first fiber strand disposed in a multiple path reversal pattern, and means for monitoring light transmission through the fiber strands, characterized in that said pattern has loops in both the forward and rearward directions with a fiber strand spacing as close as 0.31 cm (1/8 inch).

2. The detection system of claim 1 further comprising a second fiber optic strand (5) placed on or embedded in the structure in a pattern of multiple loops, the second strand overlapping the first strand (2,10,14,17) and patterned perpendicular thereto to provide an X-Y grid pattern defining a plurality of zones in the area.

3. The detection system of claim 2 wherein the second fiber is placed on or embedded in the structure in a multiple path reversal pattern, the pattern having loops in both the forward and rearward directions.

4. The detection system of claim 1 or 3 wherein the first fiber pattern has the fiber first looped back 3 rows then looped forward 4 rows, then moved forward 7 rows, looped back 3 rows and repeated.

5. The detection system of claim 3 or 4 wherein the second fiber pattern has the second fiber first looped back 3 rows then looped forward 4 rows, then moved forward 7 rows, looped back 3 rows and repeated.

6. The detection system of claim 1 or 3 wherein the first fiber pattern has the fiber looped back 7 rows, looped forward 8 rows, moved forward 15 rows then looped back 7 rows and repeated.

7. The detection system of claim 3 or 6 wherein the second fiber pattern has the fiber looped back 7 rows, looped forward 8 rows, moved forward 15 rows, looped back 7 rows and repeated.

8. The detection system of any one of the claims 1 to 7 wherein the composite structure comprises a cylindrical structure and said first optical fiber is helically wound about the structure (19).

9. The detection system of claim 8 wherein, at the end of the helical fiber run, the fiber is placed in a loop pattern perpendicular to the helical pattern.

10. The damage detection system of claim 8 wherein said second optical fiber is attached to the structure in said pattern comprised of multiple loops, the second fiber being longitudinally positioned to produce said X-Y grid pattern defining a longitudinal band with a plurality of zones defined on the structure.

11. The detection system of any one of the claims 1 to 10 wherein the fiber is adhesively attached to the structure.

12. The detection system of any one of the claims 1 to 10 wherein the fiber is embedded in the structure.

13. The detection system of any one of the claims 1 to 12 wherein the fiber has Y connectors at an input and an output end thereof.

14. The detection system of claim 13 wherein two leads are provided per Y connector, each lead taking a separate path to a separate monitoring means.

15. The detection system of claim 10 wherein a plurality of longitudinal bands are placed about the circumference of the structure.

16. The detection system of claim 15 wherein each longitudinal band is adhesively backed for incorporation in a composite structure.

17. The detection system of any one of the claims 1 to 16 further comprising a terminal block having a plurality of holes, each hole having an end of a fiber therein, the block having a bundle hole for placing the opposite ends of each fiber therein, the block being embedded in a composite structure.

18. The detection system of claim 17 further comprising a mating block having light generating means and light receiving means, configured for alignment with the fiber ends in the terminal block.

19. The detection system of claim 1, wherein the composite structure formed from a plurality of structural layers and said first fiber optic strand is embedded in the structure between a pair of structural layers.

## Patentansprüche

1. Faseroptikschadenerkennungssystem zum Einbau in ein Verbundgebilde, mit einem ersten Faseroptikstrang (2, 10, 14, 16, 17), der in einem Muster aus mehreren Schleifen (3, 13, 15) auf dem Gebilde plaziert oder in dieses eingebettet ist, wobei die Schleifen eine Fläche definieren, wobei ein Verlust an Lichtübertragung durch den ersten Faserstrang einen Schaden in diesem Bereich anzeigt, wobei der erste Faserstrang in einem Mehrfachwegumkehrmuster angeordnet ist, und mit einer Einrichtung zum Überwachen der Lichtübertragung durch die Faserstränge, dadurch gekennzeichnet, daß das Muster Schleifen sowohl in Vorwärts- als auch in Rückwärtsrichtung hat, wobei ein Faserstrangabstand bei nur 0,31 cm (1/8 Zoll) liegt.

2. Erkennungssystem nach Anspruch 1, weiter mit einem zweiten Faseroptikstrang (5), der in einem Muster von mehreren Schleifen auf dem Gebilde plaziert oder in dieses eingebettet ist, wobei der zweite Strang den ersten Strang (2, 10, 14, 17) überlappt und rechtwinkelig zu diesem gemustert ist, um ein X-Y-Gittermuster zu schaffen, das eine Vielzahl von Zonen in dem Bereich definiert.

3. Erkennungssystem nach Anspruch 2, wobei die zweite Faser in einem Mehrfachwegumkehrmuster auf dem Gebilde plaziert oder in dieses eingebettet ist und wobei das Muster Schleifen sowohl in Vorwärts- als auch in Rückwärtsrichtung hat.

4. Erkennungsystem nach Anspruch 1 oder 3, wobei in dem ersten Fasermuster die Faser zuerst in Schleifen in 3 Reihen zurück verlegt, dann in 4 Reihen vorwärts, dann 7 Reihen vorwärts bewegt, dann 3 Reihen zurück geschleift und wiederholt ist.

5. Erkennungssystem nach Anspruch 3 oder 4, wobei in dem zweiten Fasermuster die zweite Faser zuerst in Schleifen in 3 Reihen zurück verlegt, dann in Schleifen in 4 Reihen vorwärts verlegt, dann 7 Reihen vorwärts bewegt, dann in Schleifen 3 Reihen zurück verlegt und wiederholt ist.

6. Erkennungssystem nach Anspruch 1 oder 3, wobei in dem ersten Fasermuster die Faser in Schleifen 7 Reihen zurück verlegt, in Schleifen 8 Reihen vorwärts verlegt, 15 Reihen vorwärts bewegt, in Schleifen 7 Reihen zurück verlegt und wiederholt ist.

7. Erkennungssystem nach Anspruch 3 oder 6, wobei in dem zweiten Fasermuster die Faser in Schleifen 7 Reihen zurück verlegt, in Schleifen 8 Reihen vorwärts verlegt, 15 Reihen vorwärts bewegt, in Schleifen 7 Reihen zurückverlegt und wiederholt ist.

8. Erkennungssystem nach einem der Ansprüche 1 bis 7, wobei das Verbundgebilde ein zylindrisches Gebilde aufweist und wobei die erste Lichtleitfaser schraubenlinienförmig um das Gebilde (19) gewickelt ist.

9. Erkennungssystem nach Anspruch 8, wobei an dem Ende des schraubenförmigen Faserverlaufes die Faser in einem Schleifenmuster rechtwinkelig zu dem Schraubenmuster plaziert ist.

10. Schadenerkennungssystem nach Anspruch 8, wobei die zweite Lichtleitfaser an dem Gebilde in dem Muster befestigt ist, das aus mehreren Schleifen besteht, wobei die zweite Faser in Längsrichtung angeordnet ist, um das X-Y-Gittermuster zu produzieren, das ein Längsband mit einer Vielzahl von auf dem Gebilde definierten Zonen bildet.

11. Erkennungssystem nach einem der Ansprüche 1 bis 10, wobei die Faser an dem Gebilde festgeklebt ist.

12. Erkennungssystem nach einem der Ansprüche 1 bis 10, wobei die Faser in das Gebilde eingebettet ist.

13. Erkennungssystem nach einem der Ansprüche 1 bis 12, wobei die Faser Y-Verbinder an ihrem Eingangs- und ihrem Ausgangsende hat.

14. Erkennungssystem nach Anspruch 13, wobei zwei Leitungen pro Y-Verbinder vorgesehen sind, wobei jede Leitung einen separaten Weg zu einer separaten Überwachungseinrichtung nimmt.

15. Erkennungssystem nach Anspruch 10, wobei eine Vielzahl von Längsbändern um den Umfang des Gebildes plaziert ist.

16. Erkennungssystem nach Anspruch 15, wobei jedes Längsband auf einer Klebstoffschicht zum Einbau in ein Verbundgebilde angeordnet ist.

17. Erkennungssystem nach einem der Ansprüche 1 bis 16, weiter mit einem Anschlußblock, der eine Vielzahl von. Löchern hat, wobei jedes Loch ein Ende einer Faser enthält, wobei der Block ein Bündelloch hat, in dem die entgegengesetzten Enden jeder Faser plaziert werden, und wobei der Block in ein Verbundgebilde eingebettet ist.

18. Erkennungssystem nach Anspruch 17, weiter mit einem Gegenblock, der eine Lichterzeugungseinrichtung und eine Lichtempfangseinrichtung hat, die zur Ausrichtung mit den Faserenden in dem Anschlußblock ausgebildet sind.

19. Erkennungssystem nach Anspruch 1, wobei das Verbundgebilde aus mehreren baulichen Schichten gebildet ist und wobei der erste Faseroptikstrang in das Gebilde zwischen zwei baulichen Schichten eingebettet ist.

## Revendications

1. Système de détection de dommages à fibres optiques, destiné à être incorporé dans une structure de matériau composite comprenant un premier brin de fibre optique (2,10,14,16,17) placé sur la structure ou noyé dans celle-ci, suivant un tracé à boucles multiples (3,13,15) qui définissent une surface dans laquelle la perte de transmission de lumière à travers le premier brin de fibre indique un dommage causé à cette zone, le premier brin de fibres étant disposé suivant un tracé à inversions de trajets multiples, et un moyen pour surveiller la transmission de lumière à travers les brins de fibre, caractérisé en ce que le tracé comporte des boucles s'étendant à la fois vers l'avant et vers l'arrière, avec un espacement entre les brins de fibres aussi faible que 0,31 centimètre (1/8 pouce).

2. Système de détection suivant la revendication 1 caractérisé en ce qu'il comprend un second brin de fibre optique (5) placé sur la structure ou noyé dans celle-ci, suivant un tracé à boucles multiples, ce second brin chevauchant le premier brin (2,10,14,17) et s'étendant perpendiculairement à celui-ci de manière à former un tracé en forme de grille X-Y définissant une pluralité de zones dans la surface.

3. Système de détection suivant la revendication 2 caractérisé en ce que la seconde fibre est placée sur la structure ou noyée dans celle-ci suivant un tracé à inversions de trajets multiples, le tracé comportant des boucles s'étendant à la fois vers l'avant et vers l'arrière.

4. Système de détection suivant l'une quelconque des revendications 1 ou 3 caractérisé en ce que dans le tracé de la première fibre, cette fibre forme tout d'abord une boucle vers l'arrière sur trois rangées, puis une boucle vers l'avant sur quatre rangées, elle est ensuite déplacée vers l'avant sur sept rangées, elle forme une boucle vers l'arrière sur trois rangées et ceci se répète.

5. Système de détection suivant l'une quelconque des revendications 3 ou 4 caractérisé en ce que dans le tracé de la seconde fibre, cette seconde fibre forme tout d'abord une boucle vers l'arrière sur trois rangées, puis une boucle vers l'avant sur quatre rangées, elle est ensuite déplacée vers l'avant sur sept rangées elle forme une boucle vers l'arrière sur trois rangées et ceci se répète.

6. Système de détection suivant l'une quelconque des revendications 1 ou 3 caractérisé en ce que dans le tracé de la première fibre, cette fibre forme une boucle vers l'arrière sur sept rangées, elle forme une boucle vers l'avant sur huit rangées, elle est déplacée vers l'avant sur quinze rangées, elle forme ensuite une boucle vers l'arrière sur sept rangées et ceci se répète.

7. Système de détection suivant l'une quelconque des revendications 3 ou 6 caractérisé en ce que dans le tracé de la seconde fibre, cette fibre forme une boucle vers l'arrière sur sept rangées, puis une boucle vers l'avant sur huit rangées, elle est déplacée vers l'avant sur quinze rangées, elle forme une boucle vers l'arrière sur sept rangées et ceci se

8. Système de détection suivant l'une quelconque des revendications 1 à 7 caractérisé en ce que la structure de matériau composite comprend une structure cylindrique et la première fibre optique est enroulée a hélice autour de la structure (19).

9. Système de détection suivant la revendication 8 caractérisé en ce qu'à l'extrémité du brin de fibre hélicoïdal, la fibre est placée suivant un tracé à boucles perpendiculaire au tracé hélicoïdal.

10. Système de détection suivant la revendication 8 caractérisé en ce que la seconde fibre optique est attachée à la structure dans le tracé constitué de boucles multiples, la seconde fibre étant placée longitudinalement de manière à produire lé modèle de grille X-Y définissant une bande longitudinale avec une pluralité de zones définies sur la structure.

11. Système de détection suivant l'une quelconque des revendications 1 à 10 caractérisé en ce que la fibre est attaché à la structure au moyen d'un adhésif.

12. Système de détection suivant l'une quelconque des revendications 1 à 10 caractérisé en ce que la fibre est noyée dans la structure.

13. Système de détection suivant l'une quelconque des revendications 1 à 12 caractérisé en ce que la fibre a des connecteurs en forme de Y à une extrémité d'entrée et à une extrémité de sortie de cette fibre.

14. Système de détection suivant la revendication 13 caractérisé en ce que deux conducteurs sont prévus par connecteur en forme de Y, chaque conducteur suivant un trajet séparé jusqu'à un moyen de surveillance séparé.

15. Système de détection suivant la revendication 10 caractérisé en ce qu'une pluralité de bandes longitudinales sont placées autour de la circonférence de la structure.

16. Système de détection suivant la revendication 15 caractérisé en ce que chaque bande longitudinale est recouverte au dos d'un adhésif pour son incorporation dans une structure de matériau composite.

17. Système de détection suivant l'une quelconque des revendications 1 à 16 caractérisé en ce qu'il comprend en outre un bloc de raccordement comportant une pluralité de trous, chaque trou recevant une extrémité d'une fibre, le bloc comportant un trou de faisceau pour placer dans ce trou les extrémités opposées de chaque fibre, le bloc étant noyé dans une structure de matériau composite.

18. Système de détection suivant la revendication 17 caractérisé en ce qu'il comprend en outre un bloc associé ou accouplé comportant un moyen de production de lumière et un moyen de réception de lumière, configurés de manière à être alignés avec les extrémités des fibres dans le bloc de raccordement.

19. Système de détection suivant la revendication 1 caractérisé en ce que la structure en matériau composite est formée d'une pluralité de couches structurales et le premier brin de fibre optique est noyé dans la structure entre une paire de couches structurales.
